# EUROPEAN PATENT SPECIFICATION

(11) **EP 1 601 617 B1**
(45) Date of publication and mention of the grant of the patent: **01.09.2010**
(21) Application number: 04711411.1
(22) Date of filing: 16.02.2004
(51) Int. Cl.: C02F 1/461, C25B 11/12, H01M 4/96

(54) **ELECTRODE MATERIALS**
ELEKTRODENMATERIALIEN
MATERIAUX POUR ELECTRODES

(30) Priority: 18.02.2003 GB 0303753
(43) Date of publication of application: 07.12.2005
(73) Proprietor: Morganite Electrical Carbon Limited, Swansea South Wales SA6 8PP (GB)
(72) Inventor: SPACIE, C. J., Morganite Electrical Carbons Ltd., Swansea, South Wales SA6 8PP (GB); DAVIES, A. B., Morganite Electrical Carbons Ltd., Swansea, South Wales SA6 8PP (GB)
(74) Representative: Boff, James Charles
(86) International application number: PCT/GB2004/000607
(87) International publication number: WO 2004/074189

(56) References cited:
- GB-A- 900 451
- US-A- 3 549 408
- US-A- 4 469 654

## Description

This invention relates to electrode materials and is particularly applicable to water purification electrodes as used in the process of WO99/01382.

WO99/01382 discloses a water purification process in which water is treated electrolytically to destroy bacteria and in which metal electrodes, for example aluminium, are provided. The technique uses a process called 'electroflocculation' which combines the process of electrocoagulation and electroflotation.. Electrocoagulation is a process whereby a flocculant is added into a liquid at a controlled concentration by the electrolytic dissolution of a sacrificial anode at controlled voltages, the dissolved ions eventually form flocs, onto which particulate materials are preferentially absorbed. The flocs may be carried to the surface of the liquid by hydrogen bubbles generated at the cathode, and which combine with the flocs in a process called electroflotation. Various sacrificial metallic anodes can be used, for example, aluminium can be used to produced aluminium ions which combine with hydroxyl ions (generated by electrolysis of water at the cathode) to form a polymeric coagulant aluminium hydroxide, which absorbs colloidal material present in the solution to form a insoluble floc and which is carried away by the hydrogen gas bubbles generated at the cathode to the surface of the liquid. Other sacrificial metallic electrodes include iron to generate ferric ions which may be used to destabilise oil or oil emulsions.

The efficiency of the above process is dependent upon both the turbulence of the fluid flowing through the said fluid treatment unit, as build up of reaction products such as floc, electrolytically deposited material or gas bubbles at one or each of the electrodes would lead to reduced amperage across the electrodes. Introducing turbulence and/or fluid flow allows these reaction products to be swept away easily. Efficiency may be increased through the generation of small bubbles produced at lower amperage, since small bubbles will have a larger surface area than larger bubbles produced at higher amperage. For the latter effect, it is, thus, advantageous to add a salt such as sodium chloride or calcium chloride to the fluid before or during its passage between the electrodes, which results in a reduction in the size of the bubble formed at the cathode. Equally, the efficiency is dependent upon the contact area of the fluid or electrolyte with the exposed metallic electrode.

A problem with metal electrodes is that the metal can passivate. This means that a layer of oxide material may be formed that reduces the efficiency of the electrode process. Additionally, as the electrodes are consumed in the process of electrolysis, they have to be replaced. A significant amount of metal remains when the electrodes are replaced.

Carbon/graphite materials containing metallic inclusions either by infiltration or dispersion are commonly known for a number applications such as EDM electrodes (US4469654). Glassy (vitrified) carbon composites are known as a support to carry metallic particles such as platinum to catalyze a chemical reaction or to catalyze an electrochemical reaction in an electrochemical cell, e.g. a fuel cell, a cell for electrochemical synthesis, or a sensor (WO94/19515 and WO00/15576)

Techniques for producing metallic dispersions into carbon are widely known in the prior art. These range from infiltration of porous carbon bodies with molten copper under pressure and heat, pre-blending carbon or graphite granules with a metal, typically copper and in some cases a refractory material is added such as molybdenum to improve their wetability to carbon and this is either pressed or injected moulded in combination with an organic binder.

The present inventors have provided an electrode material that has several advantages in the process of WO99/01382, and which may be usable for other such processes.

The present invention provides a fluid treatment electrode comprising a bonded carbon matrix having electrochemically active metal inclusions comprising aluminium, the carbon matrix comprising 1-90% graphite based on the weight of the carbon matrix.

Preferably the amount of metal is greater than 1% by weight, more preferably greater than 5% by weight. The amount of metal is preferably up to 40%.

The carbon matrix may comprise one or more of:-
1 - 90 % (by weight) graphite,
0 - 50% coke,
10 - 50% carbon or hydrocarbon
based on the total weight of the carbon matrix.

The carbon matrix may be a kilned resin bonded composite.

Typically the metal may further include one or more of the following elements : copper, silver, nickel, iron.

The electrodes of the present invention have the advantage over metal electrodes that:-
- the metal does not passivate to the same extent as a solid metal electrode
- in operation, gas bubbles generated tend to be much smaller than with a solid metal electrode - smaller bubbles lead to more efficient electroflotation
- because the metal is dispersed in a carbon matrix, the electrodes retain strength, whereas a solid metal electrode has to be replaced while there is still a significant amount of metal left.

The full scope of the invention will be evident from the appended claims in the light of the following non-limitative description with reference to the accompanying drawings in which:-
- Fig. 1: shows the turbidity of untreated and treated water using comparative electrodes and electrodes in accordance with the present invention;
- Fig. 2: shows the phosphate content of untreated and treated water using comparative electrodes and electrodes in accordance with the present invention;
and
- Fig. 3: shows the aluminium content of untreated and treated water using comparative electrodes and electrodes in accordance with the present invention.

The electrode comprises a bonded carbon matrix with metallic inclusions.

The electrodes of the invention may be pressed, extruded, or otherwise formed from particles of raw materials forming the carbon matrix and the metal inclusions and then fired at a temperature sufficient to provide a bond between the particles, but not so high as to melt the metal.

Alternatively, the porous carbon matrix may be formed and then impregnated with molten metal which on freezing forms the metal inclusions.

Other methods of forming the electrodes will be apparent to the person skilled in the art, e.g. hot pressing, extruding, chemical deposition of the metal within the carbon matrix etc..

Conveniently, the electrode may be fabricated by blending coke, graphite and metal powder with a polymeric binder such phenolic resin. A cross-linking agent such as hexamine may be used to cure/catalyse phenol formaldehyde reaction in the resin through heat treatment. The invention is not limited to resin binders but these are particularly useful. Other carbon forming binders may be used in place of resin.

### Example 1 :

20 kg of coke was blended with 50kg of graphite and 20kg of phenolic resin with hexamine catalyst and 10kg of aluminium powder. The material was extruded at 0.5 - 2 tsi (~7.7 MPa- ~31MPa) prior to kilning between 150 and 250 °C.

The material had a bending strength typically 20-45 MPa and a resistivity of 500-1000 µΩ.m.

### Example 2:

59 kg of coke was blended with 3.2 kg of graphite, 10.4kg of lamp black,2kg of nylon fibre, 10kg of aluminium and 24 kg of phenolic resin with hexamine catalyst. The material was hot pressed at 0.5 - 3 tsi (~7.7 MPa - ~46MPa) at 100 - 200 °C before kilning between 150 and 250 deg C.

The material had a bending strength typically 25-50 MPa, and a resistivity of 3000-500µΩ.m.

### Example 3.

50% of natural graphite,
20% petroleum coke,
10% aluminium powder with a particle size distribution:-

| | |
|---|---|
| >850um | 2% |
| >710um | 7% |
| >600um | 22% |
| >500um | 44% |
| <500um | 25% |

18% phenolic resin
and 2% hexamine curing agent were blended in a high shear mixer. The resultant blend was extruded at a pressure of ~10MPa (1500psi) and cured to 180°C for 4 hours.

The material had a bending strength of 15-40MPa and a resistivity of 500-1000 µohm.cm.

Electrodes of this material were used in tests of efficacy in the process of WO99/01382.

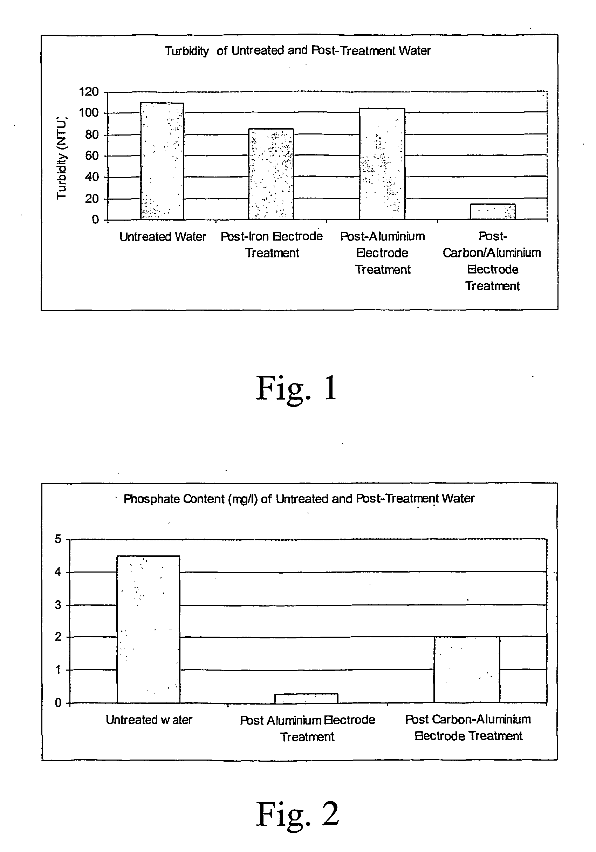

Fig.1, shows that whereas an iron electrode can reduce turbidity slightly in waste waters, an aluminium electrode hardly affects turbidity. In contrast, a carbon electrode with 10% aluminium metal dispersions, considerably reduces turbidity (NTU, Nephelometric Turbidity Unit) showing an increased efficacy in removing contaminants.
Fig. 2 shows that although phosphate removal is lower for an electrode according to the present invention than A1 treatment alone, it still achieves a low level of 2.00 mg/l. However, the use of sacrificial metallic anodes, particularly aluminium, for the treatment of effluent can be problematic when the fluid is being discharged to an environmentally sensitive area, as levels of aluminium discharged in water must be controlled to some extent.

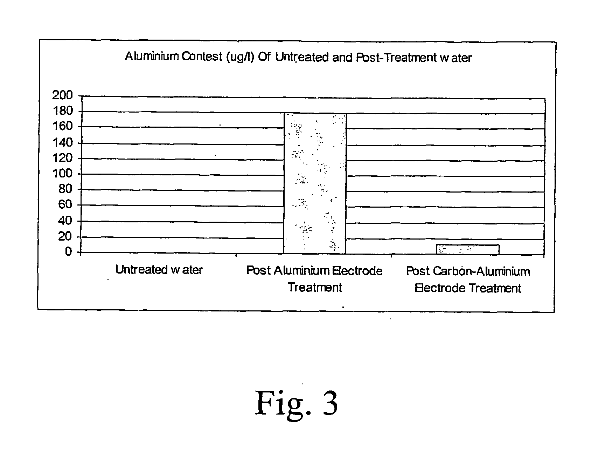

The consent level in the UK for aluminium in water is 200µg/l, but on sensitive waters this could be lowered to 100µg/l. Fig 3 shows that the aluminium content of post-treated water using an aluminium electrode is close to the upper level; whereas the aluminium content using an electrode in accordance with the invention is much lower, and is well below not only the existing UK consent level, but also below the lower level of 100µg/l.

The metal inclusions comprising aluminium may be of aluminium alone or may be mixed with elements intended to produce different effects in the process for which the electrode is used.

## Claims

1. A water purification electrode comprising a bonded carbon matrix having electrochemically active metal inclusions comprising aluminium, the carbon matrix comprising 1-90% graphite based on the weight of the carbon matrix.

2. An electrode, as claimed in Claim 1, in which the amount of metal inclusions is greater than 1% by weight.

3. An electrode, as claimed in Claim 2, in which the amount of metal inclusions is greater than 5% by weight.

4. An electrode, as claimed in any one of Claims 1 to 3, in which the amount of metal inclusions is up to 40% by weight.

5. An electrode, as claimed in any one of Claims 1 to 4, in which the carbon matrix comprises up to 50% coke based on the weight of the carbon matrix.

6. An electrode, as claimed in any one of Claims 1 to 5, in which the carbon matrix comprises 10 - 50% carbon or hydrocarbon.

7. An electrode, as claimed in any one of Claims 1 to 6, in which the carbon matrix is a kilned resin bonded composite.

8. An electrode, as claimed in any one of Claims 1 to 7, in which the metal further comprises one or more of: copper, silver, nickel, iron.

9. A method of making an electrode as claimed in any one of Claims 1 to 8, in which particles of raw materials forming the carbon matrix and the metal inclusions are formed into a body that is then fired at a temperature sufficient to provide a bond between the particles, but not so high as to melt the metal.

10. A method of making an electrode as claimed in any one of Claims 1 to 8, in which a porous carbon matrix is formed and then impregnated with molten metal which on freezing forms the metal inclusions.

## Patentansprüche

1. Wasserreinigungselektrode mit einer gebundenen Kohlenstoffmatrix, die Einschlüsse von elektrochemisch aktivem Metall, die Aluminium enthalten, aufweist, wobei die Kohlenstoffmatrix 1-90 % Graphit, bezogen auf das Gewicht der Kohlenstoffmatrix, enthält.

2. Elektrode wie in Anspruch 1 beansprucht, in welcher die Menge von Metalleinschlüssen größer als 1 Gew.-% ist.

3. Elektrode wie in Anspruch 2 beansprucht, in welcher die Menge von Metalleinschlüssen größer als 5 Gew.-% ist.

4. Elektrode wie in einem der Ansprüche 1 bis 3 beansprucht, in welcher die Menge von Metalleinschlüssen bis zu 40 Gew.-% beträgt.

5. Elektrode wie in einem der Ansprüche 1 bis 4 beansprucht, in welcher die Kohlenstoffmatrix bis zu 50% Koks, bezogen auf das Gewicht der Kohlenstoffmatrix, enthält.

6. Elektrode wie in einem der Ansprüche 1 bis 5 beansprucht, in welcher die Kohlenstoffmatrix 10 - 50% Kohlenstoff oder Kohlenwasserstoff enthält.

7. Elektrode wie in einem der Ansprüche 1 bis 6 beansprucht, in welcher die Kohlenstoffmatrix ein ofengebranntes harzgebundenes Komposit ist.

8. Elektrode wie in einem der Ansprüche 1 bis 7 beansprucht, in welcher das Metall ferner eines oder mehrere aus Kupfer, Silber, Nickel und Eisen enthält.

9. Verfahren zur Herstellung einer Elektrode wie in einem der Ansprüche 1 bis 8 beansprucht, in welchem Teilchen aus Rohstoffen, die die Kohlenstoffmatrix und die Metalleinschlüsse bilden, zu einem Körper geformt werden, der dann bei einer Temperatur, die ausreicht, um eine Bindung zwischen den Teilchen zu gewährleisten, aber nicht so hoch ist, um das Metall zu schmelzen, gebrannt wird.

10. Verfahren zur Herstellung einer Elektrode wie in einem der Ansprüche 1 bis 8 beansprucht, in welchem eine poröse Kohlenstoffmatrix gebildet wird und dann mit geschmolzenem Metall, das nach Ausfrieren die Metalleinschlüsse bildet, imprägniert wird.

## Revendications

1. Electrode de purification de l'eau comprenant une matrice carbonée liée présentant des inclusions métalliques actives au plan électrochimique comprenant de l'aluminium, la matrice carbonée comprenant 1 à 90 % de graphite sur la base du poids de la matrice carbonée.

2. Electrode selon la revendication 1, dans laquelle la quantité d'inclusions métalliques est supérieure à 1 % en poids.

3. Electrode selon la revendication 2, dans laquelle la quantité d'inclusions métalliques est supérieure à 5 % en poids.

4. Electrode selon l'une quelconque des revendications 1 à 3, dans laquelle la quantité d'inclusions métalliques atteint jusqu'à 40 % en poids.

5. Electrode selon l'une quelconque des revendications 1 à 4, dans laquelle la matrice carbonée comprend jusqu'à 50 % de coke sur la base du poids de la matrice carbonée.

6. Electrode selon l'une quelconque des revendications 1 à 5, dans laquelle la matrice carbonée comprend 10 à 50 % de carbone ou d'hydrocarbure.

7. Electrode selon l'une quelconque des revendications 1 à 6, dans laquelle la matrice carbonée est un composite lié à une résine séchée au four.

8. Electrode, selon l'une quelconque des revendications 1 à 7, dans laquelle le métal comprend, en outre, un ou plusieurs des éléments suivants : cuivre, argent, nickel, fer.

9. Procédé de fabrication d'une électrode selon l'une quelconque des revendications 1 à 8, dans lequel les particules de matériaux bruts formant la matrice carbonée et les inclusions métalliques sont façonnés sous la forme d'un corps qui est ensuite chauffé à une température suffisante pour l'établissement d'une liaison entre les particules, mais pas élevée au point de faire fondre le métal.

10. Procédé de fabrication d'une électrode selon l'une quelconque des revendications 1 à 8, dans lequel une matrice carbonée poreuse est formée, puis imprégnée de métal fondu qui, au moment de la congélation, forme les inclusions métalliques.
